# EUROPEAN PATENT SPECIFICATION

(11) **EP 3 189 229 B1**
(45) Date of publication and mention of the grant of the patent: **06.05.2020**
(21) Application number: 15749879.1
(22) Date of filing: 11.08.2015
(51) Int. Cl.: H01F 38/18, F03B 13/10, F03B 13/26, F03B 17/06

(54) **POWER GENERATING SYSTEM**
ENERGIEERZEUGUNGSSYSTEM
SYSTÈME DE GÉNÉRATION DE PUISSANCE

(30) Priority: 03.09.2014 GB 201415545
(43) Date of publication of application: 12.07.2017
(73) Proprietor: Tidal Generation Limited, Stafford, ST17 4LX (GB)
(72) Inventor: RHYMES, Jonathan, Bristol Bristol BS1 3AG (GB); PALETHORPE, Benjamin, Bristol BS1 3AG (GB); ADCOCK, Thomas, Bristol BS1 3AG (GB)
(74) Representative: Openshaw & Co.
(86) International application number: PCT/GB2015/052320
(87) International publication number: WO 2016/034840

(56) References cited:
- WO-A2-2007/125349
- GB-A- 2 496 050
- US-A1- 2011 316 282

## Description

The present invention relates to a power generating system comprising a power generating apparatus detachably coupled to a support structure by a clamp operable by an inductive auxiliary transformer.

### BACKGROUND

There is increasing interest in the use of underwater power generating apparatus that makes use of the energy of water flows, such as tidal flows. Such apparatus includes a support structure which is secured to the bed of a body of water, such as a sea, estuary or river. A turbine may be releasably connected by a clamp to the support structure on the bed of a body of water. The turbine includes a rotor having a plurality of turbine blades which are arranged to provide rotative force about a principal axis when placed in an appropriate flow of water. The rotor is used to drive an electrical machine in the form of an electromagnetic generator which is housed within the nacelle or casing of the turbine.

An example of an underwater power generating apparatus is shown in US 2011/316282.

Installation, maintenance and servicing of underwater power generating apparatus, particularly in deep sea environments, are highly costly and time consuming procedures. Known methods of deploying and/or retrieving the turbine from the support structure require the use of a battery system to provide power to operate the clamp. The use of battery systems has however proved to be problematic. The battery systems are also required to be charged using battery chargers. It is therefore desirable to simplify the deployment and/or retrieval of underwater power generating apparatus, by for example removing the need for battery systems to operate the clamp. As a result, the method of deploying and/or retrieving the turbine from the support structure may be simplified, involve lower capital cost, and/or require fewer components.

### SUMMARY OF THE INVENTION

The present invention seeks to address the problems of the prior art.

According to a first aspect, the present invention provides a submerged power generating system according to claim 1.

According to a still further aspect, the present invention provides a method for deploying and/or retrieving a power generating apparatus from the power generating system as herein described, comprising operating a clamp operable to move between a closed configuration and an open configuration to detachably connect the power generating apparatus to the support structure by supplying power to the clamp via the inductive transformer from the shore via an export cable.

According to an exemplary embodiment, the present disclosure provides a submerged power generating system comprising:
a power generating apparatus comprising a turbine having a rotor and at least one blade supported on the rotor, and a generator;
a support structure; and
an inductive communications transformer arranged in use to transmit communications via an export cable to the power generation system, and in which the inductive communications transformer comprises a primary coil in communication with the support structure, and a secondary coil in communication with the power generating apparatus.
The inductive auxiliary transformer may be arranged in use to transmit auxiliary power from the shore via an export cable to the power generating system to provide power to one or more auxiliary components, circuits and/or clamp.
The inductive auxiliary transformer may be arranged in use to transmit auxiliary power from the shore via an export cable to the power generating apparatus to provide power to one or more auxiliary components or circuits in addition to supplying power to operate a clamp.
The inductive auxiliary transformer may be splittable.

The auxiliary power may be supplied to the inductive auxiliary transformer by one or more cores extending within the export cable to the shore. The one or more cores may be arranged to supply power from the shore via the inductive auxiliary transformer to one or more of the auxiliary components, circuits and/or clamp. Each core within the export cable may be dedicated to supply power via the inductive auxiliary transformer to a separate auxiliary component, circuit and/or clamp.

Alternatively, the auxiliary power may be supplied to the inductive auxiliary transformer by connecting or tee-ing into the export cable at an appropriate location within or adjacent the power generating system.

The transformer may be any suitable type of transformer. Preferably the transformer is a rotary transformer.

The power generating apparatus and the support structure define a yaw axis for rotation of the power generating apparatus relative to the support structure. The inductive transformer is preferably arranged to be axisymmetric with the yaw axis.

The system preferably further comprises at least one export power cable. The or each export power cable may comprise at least one auxiliary core for the supply of auxiliary power from the shore connection to the power generating apparatus. Alternatively, the auxiliary power from the shore connection to the power generating apparatus may be supplied by tee off from the main at least one export power cable. The or each export power cable may be arranged so as to transmit communications between the shore and the power generation apparatus.

The system may further comprise at least one biasing mechanism. The biasing mechanism, such as for example a spring loaded mechanism, is preferably arranged to bias the secondary coil of the inductive transformer towards the primary coil.

The system may further comprise at least one communications circuit extending between the power generating system and the shore station via the support structure to carry communication signals between the shore and the power generating apparatus control systems. The or each communications circuit preferably comprises at least one communications cable and at least one splittable communications transformer. The or each communications cable may comprise at least one core for the supply of communications from the shore connection to the power generation apparatus. A primary coil of the communications transformer(s) may be located on the support structure. A secondary coil of the communications transformer(s) may be located on the power generation apparatus. The system may further comprise at least one biasing mechanism for biasing the secondary coil of the or each communications transformer towards the primary coil.

The clamp is operable to be moveable between a closed configuration in which the power generating apparatus is secured to and rotatably fixed in relation to the support structure; and an open configuration enabling the support structure and power generating apparatus to be decoupled and separated during deployment and retrieval operations. The clamp may further be operable to be placed in a rotatable configuration in which the power generating apparatus is secured to the support structure and is free to rotate in relation to the support structure. The clamp may therefore be placed in the rotatable configuration in order to allow the power generating apparatus to rotate relative to the support structure to follow a change in direction of the incoming water flow.

The energy provided by the auxiliary transformer is used to operate the clamp. As a result, the coupling and uncoupling of the power generating apparatus from the support structure is simplified and does not require any additional components such as for example battery systems.

The apparatus may further comprise a plurality of inductive transformers.

### Brief Description of the Drawings

An embodiment of the invention will now be described, by way of example only, and with reference to the accompanying drawings, in which:

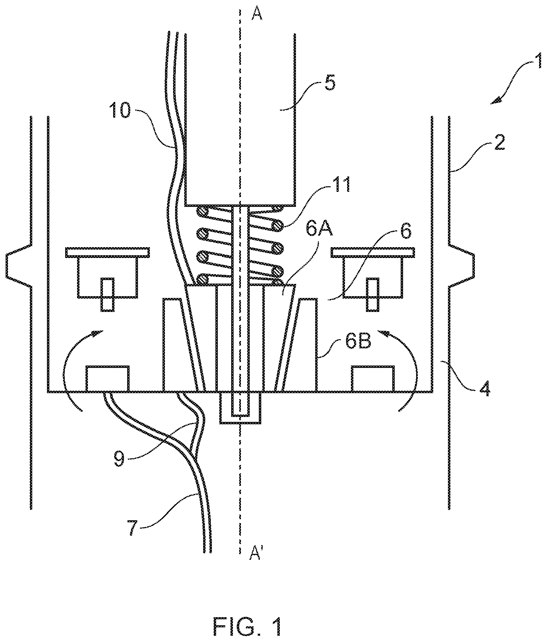

Figure 1 illustrates a cross-sectional view of the power generating system according to one embodiment of the present invention.

### Detailed Description of the Invention

With reference to Figure 1, the power generating system 1 comprises a power generating apparatus comprising a turbine 2 (part of which is shown in Figure 1) and a generator (not shown). The system 1 further comprises a support structure 4. A clamp (not shown) is operable to move between a closed configuration which secures the turbine 2 to the support structure 4, and an open configuration which releases the turbine 2 from the support structure 4.

The system 1 further comprises an inductive transformer 6. The inductive transformer 6 comprises a primary coil 6B and a secondary coil 6A. The secondary coil 6A is located within the power generating apparatus. A second auxiliary core 10 extends from the secondary coil 6A to the auxiliary power circuit of the power generating system. The primary coil 6B is located on the support structure 4. The inductive transformer 6 between the support structure 4 and the power generating apparatus is splittable, which allows coupling and uncoupling of the power generating apparatus to the support structure 4.

The power generating apparatus and the support structure 4 define a yaw axis (A-A') for rotation of the power generating apparatus relative to the support structure 4. The inductive transformer formed by the primary coil 6B and secondary coil 6A is axisymmetric with the yaw axis. It is however to be understood that the primary coil and secondary coil may have any suitable orientation relative to the support structure.

The system 1 further comprises an export power cable 7 extending from the support structure 4. The export power cable 7 comprises a first auxiliary core 9 extending from the primary coil 6B of the inductive transformer 6.

The transformer 6 is arranged to enable the engagement and/or disengagement of the turbine with the support structure to be operable by a separate system to the main export system. The transformer 6 is arranged such that power can be supplied to operate the clamp (not shown) to move the clamp between the open and closed positions as and when required, independently of the system to connect the export connections. Furthermore, the transformer 6 is arranged such that power can be exported from the power generation system via export connections that can be engaged and/or disengaged independently of the auxiliary circuit power transfer connection. The system comprises a biasing mechanism in the form of a spring loaded mechanism 11 mechanically connected to the secondary coil 6A in order to overcome any tolerances and movements of the power generation system relative to the support structure. The biasing mechanism connects the secondary coil 6A to the turbine 2. It is however to be understood that the biasing mechanism may be connected to one or more of the primary and/or secondary coils. The biasing mechanism may be provided by any suitable mechanism. The system may comprise a plurality of biasing mechanisms.

In use, the turbine 2 is connected to a winch of a winching device. The turbine 2 may comprise one or more attachment features for releasable engagement to the winch. The winching device is operable to pay out and to retract a flexible winch tether. A first end of the winch may be connectable to the turbine device. A second end of the winch may be connectable to the winching device. The flexible winch tether may have first and second portions. The first and second portions may be releasably connectable to one another. The first portion may be connectable at a first end thereof to the turbine, and at a second end thereof to the second portion. The second portion may be attached at a first end thereof to the winching device, and at a second end thereof to the second end of the first portion. The winch is operated to move the turbine 2 into position on the support structure 4. It is however to be understood that the turbine may be installed without connecting the turbine to a winch. The turbine 2 and the support structure 4 may comprise one or more cooperating alignment features which define a mating axis, and which are adapted to guide the turbine into engagement with the support structure 4 in the desired position and/or orientation relative to the support structure 4, such that when the system is in use, retraction of the tether by the winch device causes the turbine be drawn downwardly through the body of water into engagement with the support structure 4, the centre of buoyancy of the power generating apparatus being substantially in line with the mating axis prior to such engagement. The winching device and turbine may further include complementary alignment features for aligning the winching device with respect to the turbine.

The winching device may include an alignment unit operable to align the winching device with respect to the turbine. The winching device and turbine may include complementary latching components for releasably attaching the winching device to the turbine. The first and second portions of the tether may be connectable and disconnectable using a remotely operated vehicle. The winching device may be buoyant.

The secondary auxiliary coil 6A extends from the end of the winch. The power generating apparatus further comprises a spring 11 arranged to bias the secondary auxiliary coil 6A towards the primary coil 6B.

The turbine 2 is deployed on to the support structure 4 such that the secondary auxiliary coil 6A of the power generating apparatus is received within the primary auxiliary coil 6B of the support structure 4. The clamp (not shown) is initially in the open configuration allowing movement and/or rotation of the turbine 2 relative to the support structure 4. The power generating apparatus, the support structure, the primary auxiliary core and/or the second auxiliary core may comprise one or more cooperative alignment features to aid alignment of the power generating apparatus on the support structure.

Once in position, a command may be sent from the vessel or the shore station to the turbine control systems. The communication between the shore station and the turbine control systems may be effected in any suitable manner for operating the clamp. For example, the communication may be sent via the same auxiliary core that carries power to the power generation system, for example the second auxiliary core 10, in order to operate the clamp. The system may comprise a communication circuit extending between the power generating system and the shore to carry communication signals between the shore and the turbine control systems. The communication circuit preferably comprises at least one communications cable and at least one communications splittable transformer. The or each communications cable may comprise at least one core for the supply of communications from the shore connection to the turbine. A primary coil of the communications transformer(s) may be located on the support structure. A secondary coil of the communications transformer(s) may be located on the power generation apparatus. The clamp moves to the closed configuration (not shown) to retain the turbine 2 in position preventing release of the turbine 2 from the support structure 4. The clamp may in the closed position prevent movement, in particular rotational movement, of the turbine 2 relative to the support structure. The clamp may be moved to a rotatable position in which the clamp is arranged to prevent the turbine 2 from being released from the support structure 4, but may allow rotation of the turbine 2 relative to the support structure 4. The clamp may therefore in the rotatable configuration allow the turbine 2 to rotate in order to adjust to any changes in flow direction.

The rotor blades of the turbine 2 rotate within the flow of the current and energy is supplied to the generator. In order to retrieve the turbine 2, the transformer 6 transfers power to all auxiliary systems of the power generation system in order to operate the clamp to move from the closed configuration or the rotatable position to the open position. When the clamp is sufficiently open, the turbine 2 will disengage the support structure. Preferably, the turbine 2 is sufficiently buoyant such that the turbine 2 floats to the surface of the water. As the turbine 2 floats away from the support structure 4, the secondary coil 6A is removed from the primary coil 6B such that the primary coil 6B and secondary coil 6A are no longer inductively coupled. As a result, the connection between the clamp 5 and the power source is broken. The coils of the transformer are separated and the transformer is no longer able to transfer power from the grid side to the clamp and as such the opening movement of the clamp will cease. The system of the present invention therefore advantageously does not require a further operation to stop the continuing opening of the clamp. The system of the present invention therefore requires fewer systems for operation of the clamp. The system of the present invention provides a more reliable mechanism for unclamping the power generating apparatus from the support structure.

Although the illustrated embodiment has a single inductive transformer 6 it is to be understood that the system may comprise any suitable number of transformers depending on the requirements of the system. The system may for example include one or more three phase transformers. The system may also comprise any suitable number of export cables and/or auxiliary cores and/or clamps.

Although aspects of the invention have been described with reference to the embodiment shown in the accompanying drawings, it is to be understood that the invention is not limited to the precise embodiment shown and that various changes and modifications may be effected without further inventive skill and effort.

## Claims

1. A submerged power generating system (1) comprising:
a power generating apparatus comprising a turbine (2) having a rotor and at least one blade supported on the rotor, and a generator;
a support structure (4); and
an inductive auxiliary transformer (6), and in which the inductive transformer (6) comprises a primary coil (6B) in communication with the support structure (4), and a secondary coil (6A);
**characterised in that**,
the inductive auxiliary transformer (6) is arranged in use to transmit power via an export cable (7) to the power generation system (1), and the secondary coil (6A) is in communication with the power generating apparatus; and
the power generating system further comprises a clamp (5) operable to move between a closed configuration and an open configuration, by supplying power to the clamp (5) via the inductive transformer (6) from the shore via the export cable (7), to detachably connect the power generating apparatus to the support structure (4), and in which the inductive auxiliary transformer (6) is arranged in use to transmit power to operate the clamp (5).

2. A system (1) as claimed in claim 1, in which the transformer is splittable.

3. A system (1) as claimed in either of claims 1 and 2, in which the transformer (6) is a rotary transformer.

4. A system (1) as claimed in any one of the preceding claims, in which the power generating apparatus and the support structure (4) define a yaw axis for rotation of the power generating apparatus relative to the support structure (4), and in which the inductive transformer (6) is axisymmetric with the yaw axis.

5. A system (1) as claimed in any preceding claim, in which the system (1) further comprises at least one export power cable (7), in which the or each export power cable (7) comprises at least one auxiliary core (9).

6. A system (1) as claimed in any preceding claim, further comprising an inductive communications transformer arranged in use to transmit communications from the shore via the export cable to the power generation system (1).

7. A system (1) as claimed in claim 6, the inductive communications transformer comprises a primary coil (6B) in communication with the support structure (4), and a secondary coil (6A) in communication with the power generating apparatus.

8. A system (1) as claimed in any preceding claim, further comprising at least one biasing mechanism (11) for biasing the secondary coil (6A) of the inductive transformer (6) towards the primary coil (6B).

9. A method for operating a submerged power generating system (1) as claimed in any preceding claim, comprising supplying power to the submerged power generating system (1) via the inductive transformer (6) from the shore via the export cable (7).

## Patentansprüche

1. Unterwasserstromerzeugungssystem (1), Folgendes umfassend:
eine Stromerzeugungseinrichtung, die eine Turbine (2) mit einem Rotor und wenigstens einer auf dem Rotor gestützten Schaufel und einen Erzeuger umfasst;
eine Stützkonstruktion (4); und
einen induktiven Hilfstransformator (6), wobei der induktive Transformator (6) eine Primärspule (6B) in Verbindung mit der Stützkonstruktion (4) und eine Sekundärspule (6A) umfasst;
**dadurch gekennzeichnet, dass** der induktive Hilfstransformator (6) so in Verwendung angeordnet ist, um Strom über ein Exportkabel (7) an das Stromerzeugungssystem (1) zu übertragen und die Sekundärspule (6A) mit der Stromerzeugungseinrichtung in Verbindung steht; und
das Stromerzeugungssystem ferner eine Klemme (5) umfasst, die betriebsfähig ist, um sich zwischen einer geschlossenen Belegung und einer offenen Belegung zu bewegen, indem die Klemme (5) über den induktiven Transformator (6) von der Küste über das Exportkabel (7) mit Strom versorgt wird, um abnehmbar die Stromerzeugungseinrichtung mit der Stützkonstruktion (4) zu verbinden, und wobei der induktive Hilfstransformator (6) so in Verwendung angeordnet ist, um Strom zum Betreiben der Klemme (5) zu übertragen.

2. System (1) nach Anspruch 1, wobei der Transformator spaltbar ist.

3. System (1) nach einem der Ansprüche 1 und 2, wobei der Transformator (6) ein Drehtransformator ist.

4. System (1) nach einem der vorhergehenden Ansprüche, wobei die Stromerzeugungseinrichtung und die Stützkonstruktion (4) für die Drehung der Stromerzeugungseinrichtung relativ zu der Stützkonstruktion (4) eine Gierachse definieren, und wobei der induktive Transformator (6) achsensymmetrisch zur Gierachse ist.

5. System (1) nach einem der vorhergehenden Ansprüche, wobei das System (1) ferner wenigstens ein Exportstromkabel (7) umfasst, wobei das oder jedes Exportstromkabel (7) wenigstens einen Hilfskern (9) umfasst.

6. System (1) nach einem der vorhergehenden Ansprüchen, das ferner einen induktiven Verbindungstransformator umfasst, der so in Verwendung angeordnet ist, um Verbindungen von der Küste über das Exportkabel zu dem Stromerzeugungssystem (1) zu übertragen.

7. System (1) nach Anspruch 6, wobei der induktive Verbindungstransformator eine Primärspule (6B) umfasst, die in Verbindung mit der Stützkonstruktion (4) steht und eine Sekundärspule (6A), die in Verbindung mit der Stromerzeugungseinrichtung steht.

8. System (1) nach einem der vorhergehenden Ansprüche, das ferner wenigstens einen Vorspannmechanismus (11) zum Vorspannen der Sekundärspule (6A) des induktiven Transformators (6) in Richtung der Primärspule (6B) umfasst.

9. Verfahren zum Betreiben eines Unterwasserstromerzeugungssystems (1) nach einem der vorhergehenden Ansprüche, wobei der Versorgungsstrom zu dem Unterwasserstromerzeugungssystem (1) über den induktiven Transformator (6) von der Küste über das Exportkabel (7) umfasst.

## Revendications

1. Système de production d'énergie immergé (1) comprenant :
un appareil de production d'énergie comprenant une turbine (2) dotée d'un rotor et au moins une pale supportée sur le rotor, et un générateur ;
une structure de support (4) ; et
un transformateur auxiliaire inductif (6), et dans lequel le transformateur inductif (6) comprend une bobine primaire (6B) en communication avec la structure de support (4), et une bobine secondaire (6A) ;
**caractérisé en ce que**
le transformateur auxiliaire inductif (6) est disposé, lors de l'utilisation, de manière à émettre de l'énergie par l'intermédiaire d'un câble d'exportation (7) à destination du système de production d'énergie (1), et **en ce que** la bobine secondaire (6A) est en communication avec l'appareil de production d'énergie ; et
**en ce que** le système de production d'énergie comprend en outre une pince (5) pouvant être actionnée de manière à se déplacer entre une configuration fermée et une configuration ouverte, en alimentant la pince (5) en énergie par l'intermédiaire du transformateur inductif (6) à partir du rivage par l'intermédiaire du câble d'exportation (7), à raccorder de manière amovible l'appareil de production d'énergie à la structure de support (4), et dans lequel le transformateur auxiliaire inductif (6) est disposé, lors de l'utilisation, de manière à émettre de l'énergie permettant l'actionnement de la pince (5).

2. Système (1) selon la revendication 1, dans lequel le transformateur peut être scindé.

3. Système (1) selon l'une ou l'autre des revendications 1 et 2, dans lequel le transformateur (6) est un transformateur rotatif.

4. Système (1) selon l'une quelconque des revendications précédentes, dans lequel l'appareil de production d'énergie et la structure de support (4) définissent un axe de lacet de rotation de l'appareil de production d'énergie par rapport à la structure de support (4), et dans lequel le transformateur inductif (6) est axisymétrique à l'axe de lacet.

5. Système (1) selon l'une quelconque des revendications précédentes, dans lequel le système (1) comprend en outre au moins un câble d'exportation d'énergie (7), dans lequel le ou chaque câble d'exportation d'énergie (7) comprend au moins une âme auxiliaire (9).

6. Système (1) selon l'une quelconque des revendications précédentes, comprenant en outre un transformateur de communication inductif disposé, lors de l'utilisation, de manière à émettre des communications du rivage au système de production d'énergie (1) par l'intermédiaire du câble d'exportation.

7. Système (1) selon la revendication 6, le transformateur de communication inductif comprenant une bobine primaire (6B) en communication avec la structure de support (4), et une bobine secondaire (6A) en communication avec l'appareil de production d'énergie.

8. Système (1) selon l'une quelconque des revendications précédentes, comprenant en outre au moins un mécanisme de polarisation (11) servant à polariser la bobine secondaire (6A) du transformateur inductif (6) vers la bobine primaire (6B).

9. Procédé d'exploitation d'un système de production d'énergie immergé (1) selon l'une quelconque des revendications précédentes, comprenant l'alimentation en énergie du système de production d'énergie immergé (1) par l'intermédiaire du transformateur inductif (6) à partir du rivage par l'intermédiaire du câble d'exportation (7).
